# EUROPÄISCHE PATENTANMELDUNG

(11) **EP 1 847 367 A2**
(43) Veröffentlichungstag der Anmeldung: **24.10.2007**
(21) Anmeldenummer: 07102528.2
(22) Anmeldetag: 16.02.2007
(51) Int. Cl.: B29B 7/74, B29B 7/76

(54) **Mischvorrichtung für reaktive Kunststoffkomponenten und Verfahren zum Betrieb einer solchen Mischvorrichtung**

(30) Priorität: 22.04.2006 DE 102006018812
(71) Anmelder: Krauss Maffei GmbH, 80997 München (DE)
(72) Erfinder: Jung, Ludwig, 82291, Mammendorf (DE); Gruber, Marco, 81247, München (DE); Reitberger, Andreas, 85354, Freising (DE); Renkl, Josef, 85229, Markt Indersdorf (DE)
(74) Vertreter: Zollner, Richard

(57) **Zusammenfassung**

Die Erfindung betrifft ein Verfahren und eine Vorrichtung zum Mischen reaktiver Kunststoffkomponenten. Die Mischvorrichtung umfassend zumindest eine Dosier- und Zufuhreinrichtung (15) zur Zufuhr von reaktiven Kunststoffausgangskomponenten sowie eine Mischkammer (16), die mit der Dosier- und Zufuhreinrichtung verbunden oder verbindbar ist, in der die zumindest zwei reaktiven Ausgangskomponenten miteinander zu einem reaktiven Gemisch vermischbar sind und die zur Einbringung des reaktiven Gemisches in eine Kavität ausgebildet ist.

Erfindungsgemäß wird vorgeschlagen, dass die Mischkammer (16) im Formwerkzeug (19) vorgesehen oder in einem in einem vorhergehenden Produktionsschritt hergestellten Kunststoffformteil vorgesehen ist, welches während des Einfüllbetriebs zwischen der Dosier- und Zufuhreinrichtung und einer Kavität zwischengeschaltet ist.

## Beschreibung

Die vorliegende Erfindung betrifft eine Mischvorrichtung für reaktive Kunststoffkomponenten gemäß den Oberbegriffen der Ansprüche 1 bzw. 3 sowie ein Verfahren zur Herstellung eines Kunststoffverbundbauteils.

Bei der Herstellung eines Produktes aus einem reaktiven Kunststoffgemisch, z.B. aus einem Polyurethan-Material, werden zunächst zumindest zwei, später miteinander reagierende Kunststoffausgangsmaterialien miteinander vermischt und in eine Form eines Formwerkzeugs eingebracht. Dabei kann ein zu fertigendes Produkt ausschließlich aus einem Polyurethan-Material oder einem sonstigen Duroplast-Material bestehen oder auch aus einem Verbundmaterial mit einem Polyurethan-Material. So ist es auch möglich, ein Thermoplast-Material mit einem Polyurethan-Material zu beschichten, so dass das Duroplastmaterial nur ein Element oder eine Schicht des Gesamtproduktes, beispielsweise eine Oberfläche, darstellt.

Bei der Verarbeitung eines reaktiven Kunststoffgemisches werden zumeist sogenannte Mischköpfe verwendet, bei der die reaktiven Ausgangsmaterialien (z.B. die Stoffe Polyol und Isocyanat) einer Mischkammer zugeführt, dort vermischt und anschließend in die Form ausgetragen werden. Als Mischköpfe sind Linearmischköpfe oder auch Umlenkmischköpfe bekannt, die oftmals auch Steuer- und/oder Reinigungskolben aufweisen. Solche Mischköpfe sind aus dem Stand der Technik allgemein bekannt.

Allen Mischköpfen ist in der Regel zueigen, dass die reaktiven Ausgangsmaterialien separat einer Mischkammer zugeführt werden und von dort über einen Kanal und einen Austragsbereich (z.B. ein Austragsrohr) in die Form gelangen.

Weitere typische Elemente für einen Mischkopf sind Hydraulik-Einheiten und Steuerungen für den Mischkammerkolben oder den Reinigungskolben, eine Temperierung und evtl. noch Zugabeeinrichtungen, beispielsweise zur Zudosierung von Farben.

Linear-Mischköpfe besitzen den Nachteil, dass die Mischgüte des Reaktionsgemisches oftmals nicht optimal ist. Umlenk-Mischköpfe dagegen bauen in der Regel sehr groß. Dies führt zu einem großen Platzbedarf beim Einsatz in oder an Spritzgießwerkzeugen und oftmals zu einer schwierigen Handhabung und Montage der Mischköpfe. Überdies können kleine Schussgewichte bei Standardmischköpfen in der Regel nicht prozesssicher erreicht werden.

Ein weiteres Problem ist in der Festsetzung von reaktivem Material in der Mischkammer, zwischen dem Reinigungskolben und der Mischkammer sowie im Auslaufbereich zu sehen. Erfolgt eines solche Festsetzung und Aushärtung eines reaktiven Materialgemisches, so kann dies zur Funktionsunfähigkeit des Mischkopfes führen, so dass dieser aufwändig gewartet und gereinigt werden muss.

Aufgabe der vorliegenden Erfindung ist es daher, eine Vorrichtung und ein Verfahren anzugeben, welche bzw. welches gerade im Zusammenhang mit dem Einsatz in oder bei Spritzgießwerkzeugen nur einen geringen Platzbedarf benötigt, kleine Schussgewichte prozesssicher gewährleisten und den Reinigungsaufwand verringert oder eine Reinigung gänzlich unnötig macht.

Diese Aufgabe wird durch die in den Ansprüchen 1, 3 und 24 genannte Merkmale vorrichtungs- bzw. verfahrensmäßig gelöst.

Ein Kerngedanke der vorliegenden Erfindung ist darin zu sehen, dass die Mischkammer nicht wie üblich in einem eigenen Mischkopf realisiert, sondern von einer Dosier- und Zuführvorrichtung nunmehr konstruktiv getrennt ist. Die Dosier- und Zuführeinrichtungen sind in einem Hauptblock angeordnet, der handhabungsmäßig dem Mischkopf entspricht. In diesem Hauptblock findet jedoch im wesentlichen keine Vermischung von irgendwelchen Komponenten statt.

Die Mischkammer hingegen ist räumlich nunmehr eher dem Werkzeug zugeordnet. Dies hat den Vorteil, dass sie im Werkzeug integriert ist, was insgesamt zu einer Platzeinsparung beiträgt. Überdies kann die Größe und Form der Mischkammer auf die jeweilig herzustellenden Produkte angepasst werden, so dass auch kleine Materialmengen bzw. kleine Schussgewichte ohne weiteres prozessierbar sind. Auf Grund dieser Anpassungsmöglichkeit kann auch die Angussgeometrie optimiert werden. Nicht zuletzt wirkt sich die neue Konstruktion auch unmittelbar auf die Fähigkeit zur Reinhaltung der Gesamtanordnung aus, da die Mischkammer sowie auch der sich daran anschließende Anguss in der Regel bei jedem Zyklus mit dem Bauteil entformt wird und im darauffolgenden Zyklus durch den Thermoplastträger neu geformt wird.

Insgesamt ist damit funktional eine Trennung zwischen Dosier- und Zuführeinrichtungen einerseits und der Mischkammer andererseits gegeben ist.

Gemäß einer ersten Alternative ist die Mischkammer im Formwerkzeug, einer Schließeinrichtung oder einem Formträger selbst vorgesehen. Gemäß einer anderen Alternative ist die Mischkammer in einem eigenen Formteil, beispielsweise einem Kunststoffformteil ausgebildet, welches in einem vorhergehenden Produktionsschritt hergestellt ist. Das Formteil ist während des Einfüllbetriebs (nachfolgend auch Injektion genannt) zwischen der Dosier- und Zuführeinrichtung sowie einer Kavität eines Formwerkzeugs zwischengeschaltet. Natürlich kann ein solches Kunststoffformteil auch an oder in einem Formwerkzeug aufgenommen sein.

Auch können andere "Hybridlösungen" bzw. Kombinationen der vorgenannten Alternativen gewählt werden, wobei die Mischkammerbegrenzung durch das Formwerkzeug einerseits, aber auch ein Kunststoffformteil (z.B. ein Einlegerteil) andererseits gebildet sein kann. Auch die Mischkammerwandung kann als separater Bestandteil ausgebildet und in einem vorhergehenden Takt gespritzt sein.

Insgesamt wird das Reaktionsgemisch damit in einer Mischkammer erzeugt, die nicht mehr einem eigenen Mischkopf zugeordnet ist, sondern vielmehr einem Werkzeug. Daher kann das Reaktionsgemisch von dieser Mischkammer auf recht kurzem Wege - meist unter Zwischenschaltung eines Angusses - in die Kavität des Werkzeugs eingefüllt werden. Der Anguss ist in diesem Fall ebenfalls im Werkzeug integriert.

Beim Entformen des so hergestellten Produktes aus dem Werkzeug wird auch die Mischkammer entleert, so dass automatisch nach jedem Schuss bzw. Zyklus eine "Reinigung" der Mischkammer automatisch erfolgt. Eines separaten Reinigungs- oder Wartungsaufwandes bedarf es daher nicht.

Die mit dem früheren Mischkopf vergleichbare Einheit (Hauptblock) ist noch zur getrennten Einbringung der verschiedenen Komponenten in eine Mischkammer ausgebildet und besteht im wesentlichen aus einfach aufgebauten Dosiervorrichtungen und Zubehörteilen zur Versorgung der Dosiervorrichtungen (Behälter, Pumpe, etc.), vorzugsweise in kompakter Bauweise.

Wie später noch deutlich wird, sind damit auf einfache Weise unterschiedliche Anordnungen und eine große Anzahl von verschiedenen Dosier- und Zuführvorrichtungen realisierbar, was dazu führt, dass die erfindungsgemäße Mischvorrichtung überaus variabel einsetzbar ist.

So können, wie nachfolgend noch genauer dargestellt wird, auf einfache Weise und je nach Bedarf weitere Komponenten wie Farbmaterialien, Gas- oder Wasserbeladungen oder andere Zugabestoffe ergänzt und dem Gemisch hinzugefügt werden.

Da der klassische Mischkopf entfällt und die Mischkammer im wesentlichen in oder mit dem Formwerkzeug oder aber auch einer Aufspannplatte oder einem Formträger realisierbar ist, kann die Baugröße minimiert werden. Ferner ist eine einfache Integration oder Teilintegration in ein Spritzgießwerkzeug möglich, wodurch das Handling und die Montage für eine etwaige PUR-Vorrichtung (PUR = Polyurethan) vereinfacht wird.

Weitere Vorteile sind eine deutliche Reduktion der Kosten für die Mischvorrichtung sowie ein Entfall der Reinigung von Mischkammer und Austragskammer. Damit ist nicht nur eine höhere Prozesssicherheit sondern auch eine längere Standzeit gegeben.

Je nach Werkstück kann die Vermischung der Ausgangskomponenten, beispielsweise des Isocyanat und des Polyol, durch eine einfache Anpassung der Angussgeometrie des Trägers optimiert werden. Da die Mischkammergröße durch ein separates Kunststoffformteil oder ein Formwerkzeug definiert wird, können überdies auch Farbwechsel einfach und schnell realisiert bzw. Farbeinmischungen direkt am Bauteil vorgenommen werden. Auch Marmorierungseffekte sind durch einen gezielten Farbwechsel realisierbar. Nicht zuletzt ergibt sich eine einfache Ansteuerung evtl. benötigter Ventile, eine höhere Lebensdauer und eine universelle Einsetzbarkeit auch bei kleineren Werkzeugen aufgrund der flexible Gestaltungsmöglichkeit.

Wird ein eigenes Formteil, beispielsweise ein Kunststoffformteil, zur Bildung der Mischkammer verwendet, so kann dieses einteilig oder auch aus zwei Hälften oder mehrere Teilen bestehen, wobei die beiden Hälften oder die mehreren Teile miteinander unter Ausbildung einer Mischkammer verbunden oder verbindbar sein sollten.

Bei Ausbildung eines Kunststoffformteils aus zwei Hälften können beispielsweise die beiden Hälften über ein Filmscharnier verschwenkbar miteinander verbunden sein, so dass sie zusammengeklappt werden können. Die geschlossene Position wird dann durch Eingriffselemente der beiden Hälften sichergestellt. Ein solches Formteil kann in einem vorhergehenden Arbeitsschritt, beispielsweise in einem vorhergehenden Spritzgieß- oder Spritzprägeprozess hergestellt und anschließend zwischen einem Hauptblock mit einer Dosier- und Zuführvorrichtung und einem Werkzeug zwischen geschaltet werden. Alternativ kann das Formteil vor der Zufuhr des Polyurethans auch gleich in einem Formwerkzeug positioniert werden. Vorzugsweise erfolgen diese Schritte taktgleich.

Für jede Komponente kann zudem im Hauptblock eine eigene Dosier- und Zuführvorrichtung vorgesehen sein. Es können aber auch verschiedene Komponenten in einer gemeinsamten Dosier- und Zuführvorrichtung (jedoch mit getrennten Kanälen oder Leitungen) einer Mischkammer zugeführt werden.

Dabei kann jede Dosier- und Zuführvorrichtung für jede Komponente einen Vorlauf- und/oder Zufuhrkanal aufweisen. Zusätzlich kann noch ein Rücklaufkanal zur Ermöglichung einer Rezirkulation in einer Dosier- und Zuführvorrichtung vorgesehen sein. Je nach Ausführungsform sind Absperreinrichtungen (z.B. Schieber oder sonstige Ventile) im Zufuhrkanal und/oder im Rücklaufkanal sinnvoll, so dass der Komponentenfluss in gewünschter Weise steuer- oder regelbar ist. Insbesondere kann auf diese Weise zwischen einer Injektionsposition und einer Kreislaufposition umgeschaltet werden. Der Antrieb für die Absperreinrichtungen kann hydraulisch, pneumatisch, elektrisch oder mechanisch (z.B. federbelastet) ausgebildet sein. Auch ist es möglich, die Absperreinrichtungen separat oder gekoppelt anzusteuern. Bei der gekoppelten Ansteuerung kann auch eine Zwangssteuerung verwendet werden, so dass bestimmte Absperreinrichtungen nur zusammen geschlossen oder geöffnet werden können oder nur dann geschlossen bzw. geöffnet werden können, wenn eine andere Absperreinrichtung umgekehrt geöffnet oder geschlossen wird. Auch ist es möglich, die Absperreinrichtungen positionsmäßig zu überwachen oder sie für das Öffnen oder Schließen separat zeitverzögert anzusteuern.

Zwischen der Dosier- und Zufuhreinrichtung einerseits und dem Formwerkzeug bzw. der Mischkammer andererseits können Düsenplatten oder Düseneinrichtungen oder auch andere Zwischenvorrichtungen angeordnet sein, wobei die Zwischenvorrichtungen nach Art eines Adapters ausgebildet sein können, die mit der Dosier- und Zufuhreinrichtung aber auch mit dem Formwerkzeug bzw. einer Düsenplatte dichtend verbindbar sind. Ausführungsformen werden später noch beschrieben. In jedem Fall kann die Zwischenvorrichtung nicht nur als reines Distanzstück agieren, sondern auch weitere Zufuhreinrichtungen für die verschiedensten Materialien mit Vorlauf-, Zufuhrkanal, Rücklauf und Absperreinrichtungen aufweisen. Auf diese Weise ist es möglich, sehr flexibel auf unterschiedliche Komponenten-Anforderungen zu reagieren.

Die jeweiligen Komponentenleitungen, also die Vorlauf, Rücklauf oder Zuführleitungen, können zusätzlich temperiert sein. Die Temperierung kann durch flüssige Medien, wie Öl, Wasser Glykolgemische, etc. geschehen oder auch durch eine elektrische Temperierung (z.B. mittels Heizpatronen, einer Widerstandsheizung, einer induktiven Heizung etc.) erfolgen.

Die Mischkammer bzw. das die Mischkammer bildende Element besitzt vorzugsweise für jede Dosier- und Zuführeinrichtung bzw. für jede zuzuführende Komponente eine eigene Öffnung, an der eine zugeordnete Dosier- und Zuführeinrichtung ankoppelbar ist. Insbesondere können die Dosier- und Zuführeinrichtungen mittels einer Betätigungseinrichtung zur Mischkammer hin- und von der Mischkammer weg verfahren werden.

Dabei kann die Betätigungseinrichtung auch zur druckmäßigen Ankopplung der Dosier- und Zufuhreinrichtung an eine Mischkammer verwendet sein. Dies bedeutet, eine Dosier- und Zufuhreinrichtung kann von einer oben erwähnten Betätigungseinrichtung gegen das die Mischkammer bildende Element bzw. die Öffnung gepresst werde, um ein Austreten von Material aus der Öffnung und zwischen Mischkammer und Dosier- und Zufuhreinrichtung zu verhindern. Insbesondere ist die Öffnung einer Mischkammer komplementär zu einer zugeordneten, daran ankoppelbaren Dosier- und Zufuhreinrichtung ausgebildet. Ferner ist zwischen Dosier- und Zufuhreinrichtung und dem die Mischkammer bildenden Element eine Dichtvorrichtung vorgesehen.

In der Mischkammer wie auch in einem nachfolgenden Angussbereich, der zwischen Mischkammer und der Kavität vorgesehen sein kann, sind vorzugsweise Mischelemente angeordnet, welche die innige Vermischung der Ausgangskomponenten fördern und verbessern.

Verfahrensmäßig kann in einem ersten Schritt ein Mischkammerelement, dem nachfolgend die separaten Komponenten zugeführt werden, hergestellt und einem Formwerkzeug zugeordnet werden. In der Mischkammer erfolgt dann die innige Vermischung der verschiedenen Komponenten, die nachfolgend in die Kavität eines Werkzeugs überführt werden. Es ist aber nicht in jedem Fall ein separates Mischkammerelement notwendig. Evtl. kann auch eine Kammer in einem Formwerkzeug, einer Schließeinheit oder einem Formträger als Mischkammer ausgebildet sein. Eine solchermaßen gewählte Mischkammer kann überdies an der Begrenzungswand ausgekleidet sein.

Besonders vorteilhaft bei der Verwendung eines eigenen Formteils für eine Mischkammer ist eine taktweise Herstellung desselben, evtl. bei Integration eines Angussbereichs. Will man ein Verbundbauteil herstellen, bei dem ein Substratmaterial (z.B. ein Thermoplastmaterial) mit einem Polyurethanmaterial nachfolgend beschichtet oder überflutet wird, so kann bereits bei der Herstellung des Substrats bzw. Trägerbauteils die Mischkammer mit diesem Bauteil integriert hergestellt und ausgebildet werden. Dieses integrierte Element übernimmt in dem zweiten Takt dann die Funktion der Mischkammer. Nach dem Aushärten des Polyurethans kann evtl. die Mischkammer zusammen mit dem Anguss und dem darin ausgehärteten Polyurethan abgetrennt werden, so dass das fertige Produkt vorliegt. In diesem Fall wäre die Mischkammer eine Art "verlorenes Element" oder "verlorene Schalung" Der Anguss wiederum kann beim Befüllen der Form eine Nachmischaufgabe übernehmen. Der Anguss kann aber auch ein Bestandteil des zu fertigen Produktes sein.

Für die Einbringung des reaktiven Materialgemisches (z.B. des Polyurethans) sind somit nur noch die Dosier- und Zuführvorrichtungen im Hauptblock notwendig, der damit konstruktiv einfach aufgebaut werden kann. Auch ist die Baugröße der Düsen minimiert und eine einfache Integration in ein Spritzgießwerkzeug ermöglicht.

Weitere Merkmale und Ausführungsvarianten sind in den Unteransprüchen definiert.

Die vorliegende Erfindung wird nachfolgend anhand von verschiedenen Ausführungsbeispielen und mit Bezug auf die beiliegenden Zeichnungen näher erläutert. Die Zeichnungen zeigen in
- Figur 1: eine schematische Detailschnittdarstellung einer erfindungsgemäßen Mischvorrichtung im Injektionszustand,
- Figur 2: eine schematische Darstellung wie Figur 1, jedoch im Rezirkulationszustand,
- Figur 3: eine zweite Ausführungsform einer erfindungsgemäßen Mischvorrichtung mit separierter Dosier- und Zufuhrvorrichtung,
- Figur 4: eine weitere Ausführungsform einer erfindungsgemäßen Mischvorrichtung, mit Dosier- und Zufuhrvorrichtungen für eine dritte und vierte Komponente,
- Figur 5: eine schematische Darstellung einer Mischkammer mit einer Vielzahl von Dosier- und Zufuhrvorrichtungen,
- Figuren 6a und 6b: zwei Darstellungen einer von einer Mischkammer beabstandeten bzw. an eine Mischkammer angedockte Dosier- und Zufuhrvorrichtung,
- Figuren 6c bis 6e: schematische Detailschnittdarstellungen von verschiedenen Ausführungsformen einer Öffnung in der Mischkammer,
- Figuren 7a bis 7c: drei schematische Darstellungen einer Mischkammer mit Mischelementen,
- Figur 8: eine schematische Darstellung einer Mischkammer in einer alternativen Ausführungsform für eine Mischeinrichtung,
- Figuren 9a bis 9c: verschiedene schematische Darstellungen für ein Kunststoffformteil zur Ausbildung einer Mischkammer und
- Figuren 10 und 10b: eine weitere Ausführungsform für eine Dosier- und Zuführvorrichtung

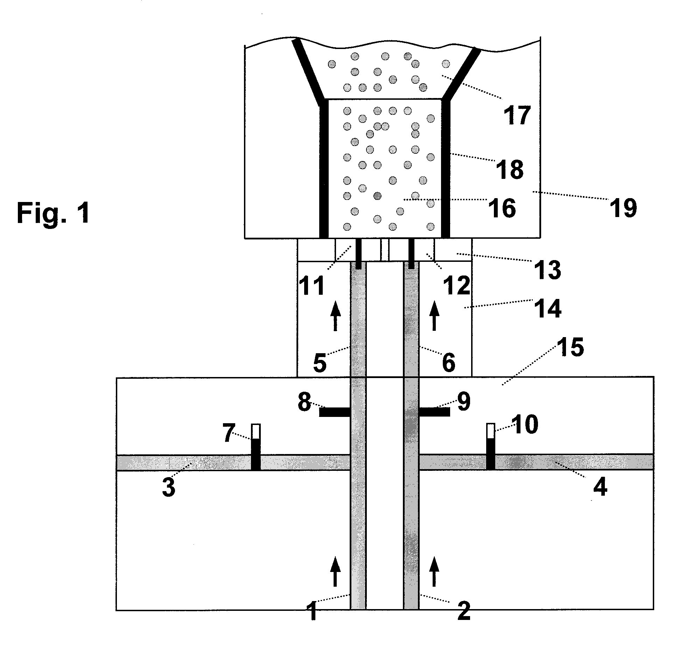

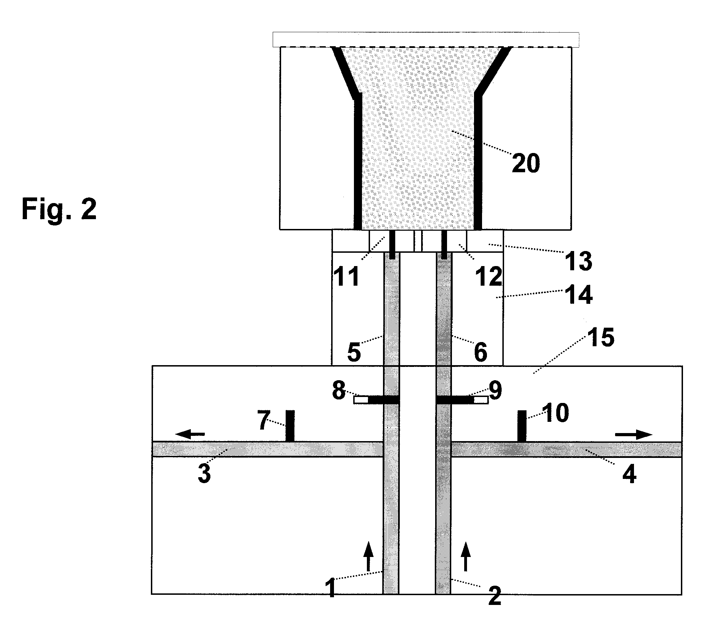

In den Figuren 1 und 2 ist eine erste Ausführungsform einer erfindungsgemäßen Mischvorrichtung in einer schematischen Zeichnung gezeigt. Dabei ist ein Hauptblock einer Zufuhreinrichtung 15 für zwei Ausgangsmaterialien dargestellt, in dem verschiedene Kanäle ausgebildet sind. Mit den Bezugsziffern 1 und 2 sind Vorlaufkanäle für die Komponenten 1 und 2 dargestellt. Diese Kanäle sind (nicht gezeigt) mit Leitungen verbunden, von denen sie die Ausgangsmaterialien, die aus Behältern stammen und mittels Pumpen gefördert werden, erhalten. Die Vorlaufleitung 1 verzweigt sich im weiteren Verlauf in einen Rücklaufkanal 3 sowie eine Zufuhrleitung 5. Ebenso verzweigt sich der Vorlaufkanal 2 im weiteren Verlauf im Hauptblock 15 in einen Rücklaufkanal 4 sowie eine Zufuhrleitung 6.

Unmittelbar an den Hauptblock 15 schließt sich ein Adapterzwischenstück 14 an, in dem zwei Kanäle derart ausgebildet sind, dass sie mit dem Zufuhrkanal 5 bzw. dem Zufuhrkanal 6 fluchten und strömungsmäßig verbunden sind. Diese Kanäle treten am in Figur 1 oberen Ende aus dem Adapterzwischenstück 14 aus.

Zwischen dem Adapterzwischenstück 14 und dem später noch genauer zu erläuternden Formwerkzeug 19 ist eine Zufuhrdüse 13 angeordnet, welche die Zufuhrkanäle 5 und 6 mit Düsen 11 und 12 abschließen. Diese Düsen definieren eine Öffnung der beiden Zufuhrkanäle 5 und 6 in eine Mischkammer 16, welche im Einlassbereich eines Formwerkzeugs 19 angeordnet ist. Die Mischkammer 16 wie auch ein strömungsmäßig nachfolgender Angussbereich 17 sind mit einem Kunststoffformteil an einer Begrenzungswand 18 ausgekleidet. Dieses Kunststoffformteils bzw. die Begrenzungswand 18 kann bei jedem Takt bzw. jedem Zyklusschritt mit dem Produkt entformt werden, wie später noch deutlich wird.

Wichtig ist, dass die Übergänge zwischen dem Hauptblock 15 und dem Adapterzwischenstück 14 sowie zwischen dem Adapterzwischenstück 14 und der Zufuhrdüse 13 sowie der Zufuhrdüse 13 und dem Formwerkzeug 19 absolut dicht sind. Dies wird durch ein entsprechendes Anpressen der verschiedenen Teile und Elemente unter Verwendung von entsprechenden Dichtflächen erreicht.

Vom Formwerkzeug 19 ist in Fig. 1 lediglich der Eingangsbereich dargestellt. Die Kavität, in der das Formteil gebildet wird, ist nicht weiter dargestellt. In dieser Kavität kann vor dem Injektionsschritt bereits ein Einlegerteil angeordnet sein, welches mit dem reaktiven Kunststoffgemisch überflutet wird.

In den Zufuhrkanälen 5 und 6 sowie den Rücklaufkanälen 3 und 4 sind jeweils Absperrorgane in Form von steuerbaren Schiebern 7, 8, 9 und 10, die ein Absperren der entsprechenden Leitungen ermöglichen, angeordnet. Die Absperrorgane können über eine nicht dargestellte Steuereinrichtung und nicht dargestellte Antriebsmittel entweder separat oder zwangsgesteuert gekoppelt sein.

Bei der in Figur 1 dargestellten Schaltposition sind die Absperrschieber 8 und 9 geöffnet, die Absperrschieber 7 und 10 geschlossen. Damit können die beiden durch die Vorlaufleitungen zugeführten Komponenten 1 und 2 über die Zufuhrkanäle 5 und 6 und die Zufuhrdüsen 11 und 12 der Mischkammer 16 zugeführt werden, in der sich die beiden Komponenten innig miteinander vermischen und durch den Angussbereich 17 in die Kavität (nicht dargestellt) strömen.

Ist der Injektionsvorgang beendet, was beispielsweise durch einen in der Kavität oder im Angussbereich angeordneten Sensor, insbesondere einen Drucksensor (nicht dargestellt), registriert werden kann, so können die Absperrschieber 8 und 9 geschlossen und die Absperrschieber 7 und 10 geöffnet werden. Damit kann nun keine Komponente mehr über die Zufuhrkanäle 5 und 6 in die Mischkammer 16 gelangen, die bereits mit Polyurethan-Material 20 gefüllt ist. Vielmehr fließen die Komponenten über die Vorlaufkanäle 1 und 2 und die Rücklaufkanäle 3 und 4 zurück zu ihren (nicht dargestellten) Behältnissen. In diesem Zustand kann nun die Einheit aus Hauptblock, Adapterzwischenstück 14 und Düsenplatte 13 von dem Formwerkzeug abgehoben werden, insbesondere dann wenn das Polyurethan-Material 20 zumindest teilweise ausgehärtet ist.

In einem separaten, nachfolgenden Entformschritt wird das so hergestellte Kunststoffteil, beispielsweise ein Verbundteil aus einem überfluteten Thermoplasteinlegerteil, aus dem Formwerkzeug entformt. Dabei wird auch das in der Mischkammer 16 und dem Angussbereich 17 befindliche Polyurethan-Material zusammen mit dem Kunststoffformteil 18, welches die Begrenzungswand bildete, entformt. Dies führt dazu dass die Mischkammer aber auch der Angussbereich automatisch gereinigt und in einen sauberen Zustand versetzt werden.

In den Figuren nicht dargestellt, ist damit ein leeres Formwerkzeug vorhanden sowie die Kombination aus Düsenplatte 13, Adapterzwischenstück 14 und Hauptblock 15 in abgehobenen Zustand.

In einem separaten Schritt kann nun die Mischkammerbegrenzungswand in dem Formwerkzeug wieder gebildet werden. Dazu kann beispielsweise ein entsprechendes Einsatzteil in diesen Bereich des Formwerkzeugs eingelegt werden. Alternativ kann ein Einlegerteil in einem ersten Takt eines Spritzgießprozesses unter Ausbildung der Mischkammerbegrenzungswand 18 hergestellt werden.

Sobald dieser Schritt beendet ist, kann die Einheit aus Düsenplatte 13, Adapterzwischenstück 14 und Hauptblock 15 wieder an das Formwerkzeug 19 angekoppelt werden, woraufhin in einem nächsten Zyklus die Kavität des Formwerkzeugs 19 unter Zwischenschaltung der Mischkammer 16 und des Angusses 17 neu befüllt wird.

Insgesamt ist damit lediglich eine Dosier- und Zufuhrvorrichtung in Form des Hauptblocks 15 sowie der Düsenplatte 13 notwendig. Diese Elemente müssten jedoch keine Mischkammer aufweisen, welche erst in dem Formwerkzeug gebildet ist, so dass sich die verschiedenen Komponenten in diesem Bereich auch nicht vermischen können.

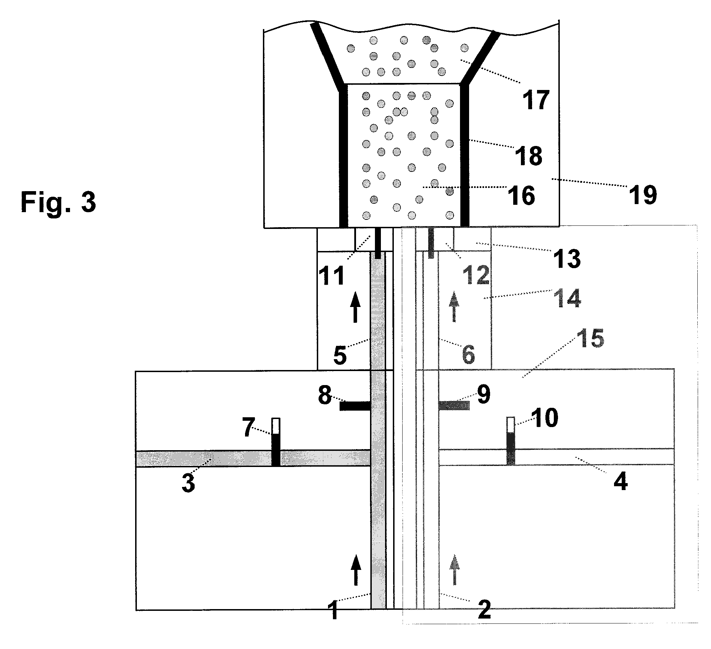

Eine leicht geänderte Ausführungsform ist in Figur 3 zu erkennen. In Figur 3 ist der in den Figuren 1 und 2 als eine Einheit dargestellte Hauptblock in zweiteiliger Form vorgesehen, wobei die einzelnen Hauptblockteile separat gehandhabt werden können. Dabei ist der in Fig. 3 linke bereich normal, der in Fig. 3 rechte Bereich leicht aufgehellt gezeigt. Die übrigen Bezugszeichen bezeichnen die gleichen Einrichtungen.

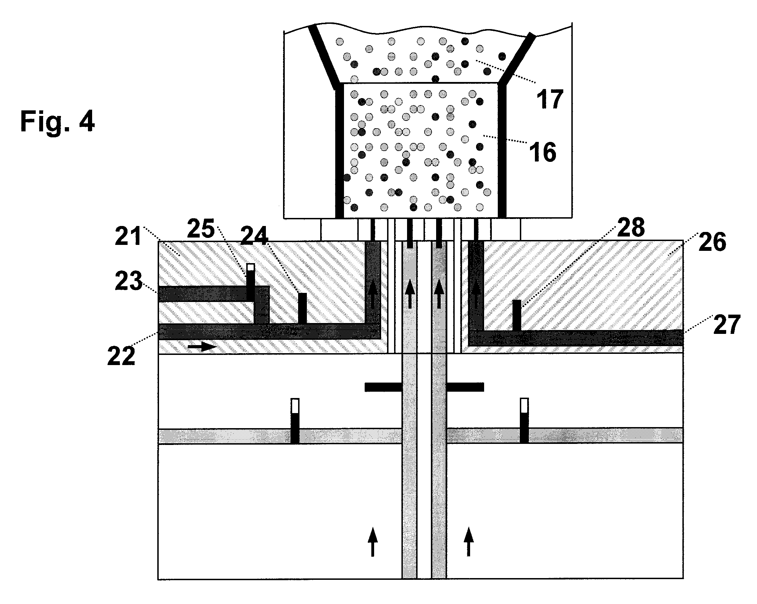

Die überaus große Variabilität der vorliegenden Erfindung wird mit Bezug auf die Figur 4 deutlich. In Figur 4 ist gegenüber der Ausführungsvariante in den Figuren 1, 2 das Adapterzwischenstück 14 durch ein andere Adapterzwischenstück in Form einer dreigeteilten Einheit ersetzt. Die dreigeteilte Einheit umfasst dabei einen ersten Block 21 für eine weitere Komponente 3, einen zweiten Block 26 für eine weitere Komponente 4 und ein nicht näher bezeichnetes Zwischenteil, welches die beiden Zufuhrkanäle 1 und 2 bis zur Düsenplatte verlängert.

Überdies ist die Düsenplatte ausgetauscht und an die nunmehr aus dem Adapterzwischenstück austretenden vier Kanäle angepasst. Sie besitzt somit vier Düsen.

Im Hauptblock 15 hat sich an sich nichts geändert.

Im Block 21 sind Kanäle in Form eines Vorlaufkanals 22, eines Rücklaufkanals 23 und eines weiteren Zufuhrkanals realisiert. Überdies ist sowohl in der Zufuhrleitung wie auch in der Rücklaufleitung 23 ein Absperrschieber 24 bzw. 25 angeordnet.

Im Block 26 ist ein Zufuhrkanal 27 angeordnet, der mittels eines Absperrschiebers 28 absperrbar ist.

Beim Betrieb der in Figur 4 dargestellten Vorrichtung können nun bei der Stellung der Absperrschieber - wie in Figur 4 gezeigt - die reaktiven Ausgangskomponenten aus dem Hauptblock über das Adapterzwischenstück und die Düsenplatte in die Mischkammer 16 des Formwerkzeugs 19 eingeführt werden. Gleichzeitig können über die Blöcke 21 und 26 die beiden Zusatzmaterialien aus den Kanälen 22 und 27 der Mischkammer zugeführt werden. Dabei kann die Zufuhrrate (Menge) der jeweiligen Komponenten 3 und 4 über die Stellung der Schieber 24 und 28 gesteuert werden. Bei der Komponente 3 ist es überdies möglich, in einen Rezirkulationszustand überzugehen. Dies ist beispielsweise dann notwendig, wenn bei einer Komponente die Gefahr einer Aushärtung in den Kanälen besteht.

Wie man leicht nachvollziehen kann, ist die Variabilität durch Verwendung anderer Adapterzwischenplatten sehr groß. So können keine, eine oder mehrere Zuführstoffe den reaktiven Ausgangskomponenten beigemengt werden. Überdies ist es auf diese Art und Weise möglich, andere Isocyanat- oder Polyolkomponenten beizumischen und so verschiedene Aufschäumzeiten zu realisieren.

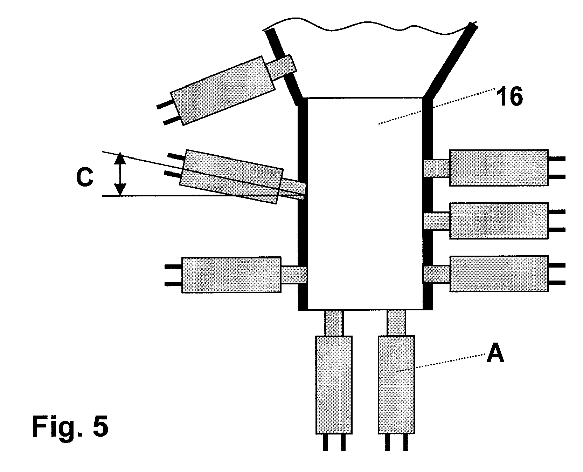

Eine weitere Darstellung des variablen Einsatzes der erfindungsgemäßen Mischvorrichtung ist in Figur 5 gezeigt. In Figur 5 ist lediglich die begrenzte Mischkammer 16 mit anschließendem Angussteil dargestellt. Diese Mischkammer kann wiederum in einem Formwerkzeug ausgebildet sein.

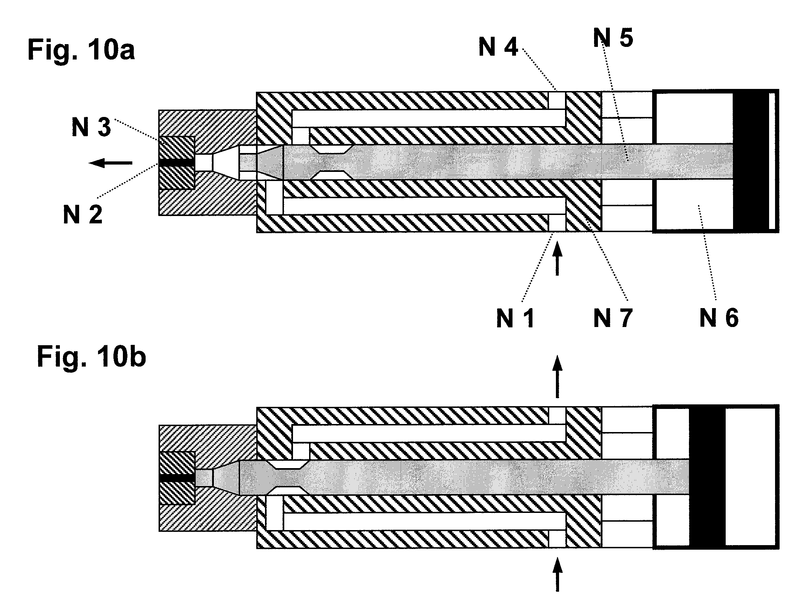

Um die Mischkammer herum sind acht verschiedene Dosier- und Zufuhreinrichtungen A angeordnet. Eine Ausgestaltungsmöglichkeit einer solchen Dosier- und Zufuhrvorrichtung ist in den Figuren 10a und 10b zu erkennen. Dabei können die Dosier- und Zufuhrvorrichtungen bzw. die Injektionsmodule beliebig zueinander und auch zur Mischkammer angeordnet sein. Es gibt auch keine Beschränkung bezüglich der Anzahl der verwendeten Injektionsmodule. So könnten für eine erste Komponente 2 Injektionsmodule, für eine zweite Komponente 3 Injektionsmodule und für eine letzte Komponente wieder 2 Injektionsmodule vorgesehen sein.

Diese Dosier- und Zufuhreinrichtungen A gemäß Fig. 10a und 10 b weisen in einem Gehäuse N7 eine Vorlaufleitung N1 auf, die in einen zentralen Kanal mündet, in der eine Verschluss- und Steuernadel N5 angeordnet ist. Versetzt in die zentrale Bohrung mündet eine Rücklaufleitung N4. Am ausgangsseitigen Bereich der zentralen Bohrung ist eine Düse N3 vorgesehen, die eine Zufuhröffnung N2 zu einer hier nicht dargestellten Mischkammer bildet. Durch Betätigung der Verschluss- und Steuernadel N5 mittels eines Ansteuermoduls N6 kann nun wahlweise entweder eine Strömungsverbindung zwischen der Vorlaufleitung N1 und der Zufuhröffnung N2 oder zwischen der Vorlaufleitung N1 und der Rücklaufleitung N4 gebildet werden. (letzteres in Figur 10b zu erkennen).

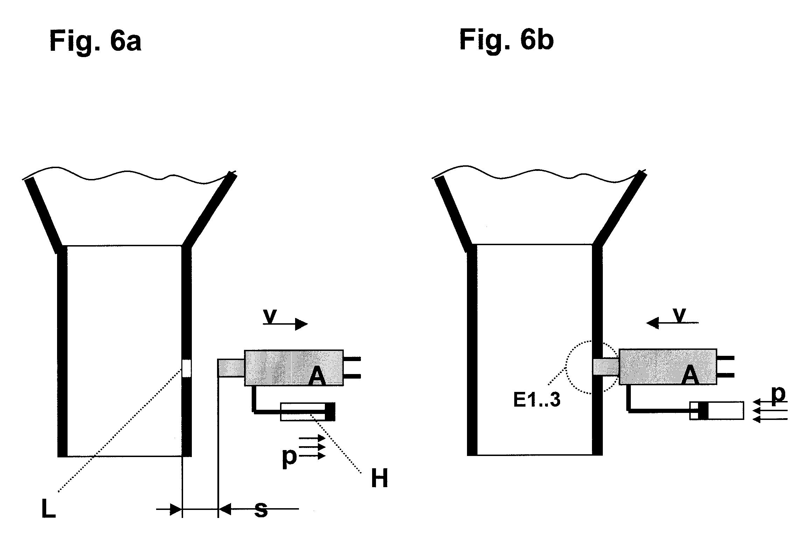

Die einzelnen Dosier- und Zufuhreinrichtungen A können, wie in den Figuren 6a und 6b näher gezeigt ist, mittels einer Verfahr- und Anpressvorrichtung H an eine zugeordnete Öffnung L in der Mischkammer 16 angedockt werden. Dabei ist in Figur 6a durch Anlegen eines Druckes p in der Verfahr- und Anpressvorrichtung H die Dosier- und Zufuhreinheit A um einen Weg s gegenüber der Öffnung L der Mischkammer zurückverschoben.

Die Verfahr- und Anpressvorrichtung H kann dabei hydraulisch (Hydraulikzylinder), pneumatisch (Pneumatikzylinder), elektrisch (z.B. elektrisch angetriebene Spindel) oder mechanisch (z.B. über Feder oder Schrägschieber) betätigt sein. Die Verfahr- und Anpressvorrichtung H kann weiter Bestandteil des Werkzeugs oder eine eigenständiges Modul sein. Auch kann sie im PUR-Injektionsmodul integriert sein.

Die Verfahrgeschwindigkeit und der Anpressdruck können von einer PUR-Anlage oder einer Spritzgießmaschine, mit der die PUR-Anlage zusammenarbeitet, geregelt oder gesteuert werden. Dabei kann die maximale Verfahrgeschwindigkeit bzw. der Anpressdruck so eingestellt werden, dass die Mischkammerwand nicht beschädigt wird.

In Figur 6b ist die Dosier- und Zufuhreinrichtung A durch Anlegen eines entgegengesetzten Druckes p in der Verfahr- und Anpressvorrichtung H mittels einer Geschwindigkeit v an die Mischkammer 16 hinverfahren und an diese angelegt. Dabei wird ein entsprechender Druck aufgebracht, der eine dichtende Ankoppelung von Dosier- und Zufuhreinrichtung A an die Mischkammer erlaubt.

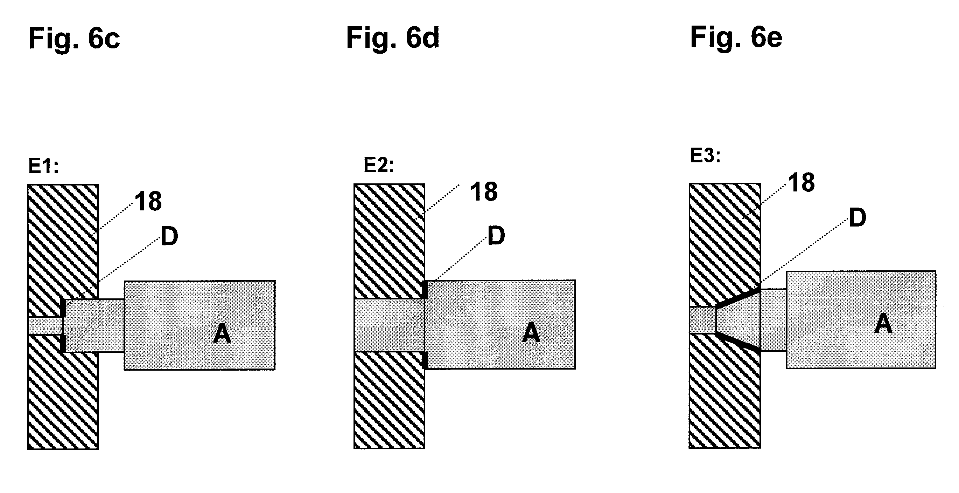

In den Figuren 6c bis 6e ist der in Figur 6b gestrichelte Kreisbereich vergrößert dargestellt, so dass verschiedene Ausgestaltungen der Öffnung L in der Mischkammer zur Ankoppelung einer Dosier- und Zufuhreinrichtung A zu erkennen sind. In Figur 6c (E1) ist eine gestufte Bohrung zu erkennen, wobei das Ende der Dosier- und Zufuhreinrichtung A in gleicher Weise komplementär ausgebildet ist. Im Bereich der Stufe ist eine Dichteinrichtung D realisiert, so dass durch entsprechendes Anpressen der Dosier- und Zufuhreinrichtung A an die Mischkammer 16 kein Kunststoffmaterial austreten kann oder anders gesagt, das reaktive Kunststoffgemisch sicher in die dafür vorgesehene Kavität eingebracht werden kann. Weitere Ausführungsformen sind in den Figuren 6d und 6e in Form von zylindrischen Öffnungen (Figur 6d) sowie konischen Öffnungen (Figur 6e) dargestellt, wobei jeweils eine Dichteinrichtung D zur Abdichtung vorgesehen ist.

Optional ist eine Positionsüberwachung der Dosier- und Zuführeinrichtungen A möglich so dass ein gesteuertes oder geregeltes Anfahren oder Abheben möglich ist. Insbesondere ermöglicht die Verfahrvorrichtung eine Freistellung des Bauteilbereichs zur Entformung des Bauteiles am Ende des Injektionszyklusses. Überdies ist eine Freistellung des Werkzeugbereichs für etwaige Reinigungszwecke hilfreich.

Der Anpressdruck kann in Abhängigkeit vom eingestellten oder erreichten Druck einer oder mehrerer Komponenten abhängig gemacht werden. So kann beispielsweise bei hohen PUR-Komponentendrücken der Anpressdruck in vorgegebenen Grenzen erhöht werden, um ein Hinterspritzen von Werkzeugkomponenten mit PUR-Material zu verhindern. In jedem Fall sollte der Anpressdruck jedoch immer auf eine bestimmte Mindesthöhe eingeregelt werden, um eine Zurückschieben der Vorrichtung während und nach der PUR-Injektion sowie während und nach dem Kunststoffeinspritz- und Nachdruckvorgang zu verhindern. Für eine etwaige Regelung kann ein Druckaufnehmer in der Zuführleitung einer oder mehrerer Komponenten angeordnet sein. Alternativ kann der Pumpendrucksensor bzw. der Systemdrucksensor verwendet werden.

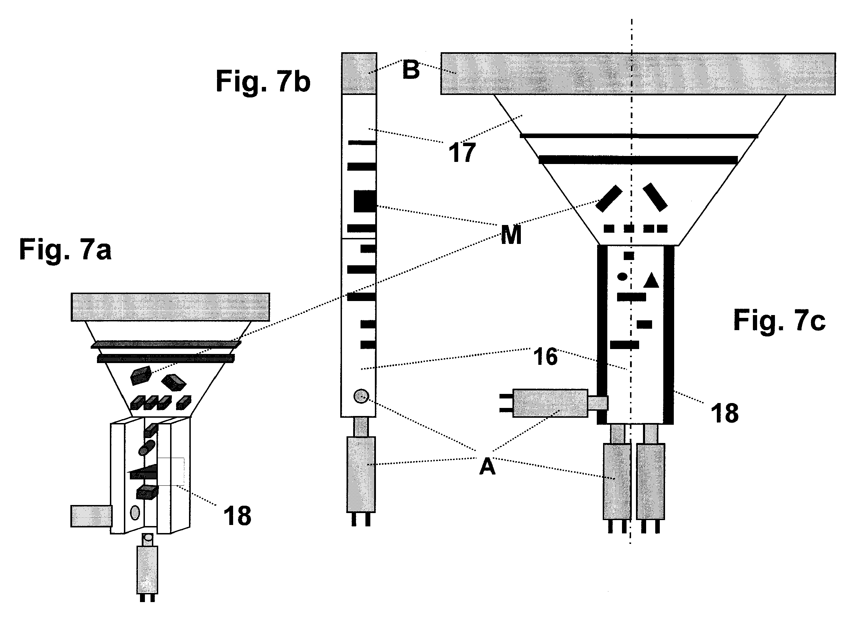

In den Figuren 7a bis 7c ist eine weitere schematische Ausführungsform einer Mischvorrichtung mit separaten, eingelegten Mischelementen M gemäß der vorliegenden Erfindung gezeigt. Diese Mischelemente M übernehmen eine zusätzliche Mischfunktion für das PUR-Reaktionsgemisch. Diese Mischteile sind Einwegmischteile und werden mit dem Bauteil entformt.

Dabei können zwischen verschiedenen, strömungsmäßig nachfolgend angeordneten Komponenteneinlässen Mischelemente M angeordnet sein, so dass gezielt PUR-Komponenten nacheinander zumischbar sind. Dadurch kann eine anderes Reaktionsverhalten des PUR-Reaktionsgemisches genutzt werden.

In diesem Beispiel ist in schematischer Weise in 7c eine Draufsicht, in Figur 7b eine Seitenansicht und in Figur 7a eine schematische Perspektivansicht dargestellt, wobei mit dem Bezugszeichen A Dosier- und Zufuhreinrichtungen, mit Bezugszeichen 16 eine Mischkammer, mit Bezugszeichen 17 ein Angussbereich und mit Bezugszeichen B ein Kavitätsbereich gezeigt ist. Die Mischelemente können je nach Mischerfordernis und Materialwahl in unterschiedlicher Zahl und Position verwendet werden.

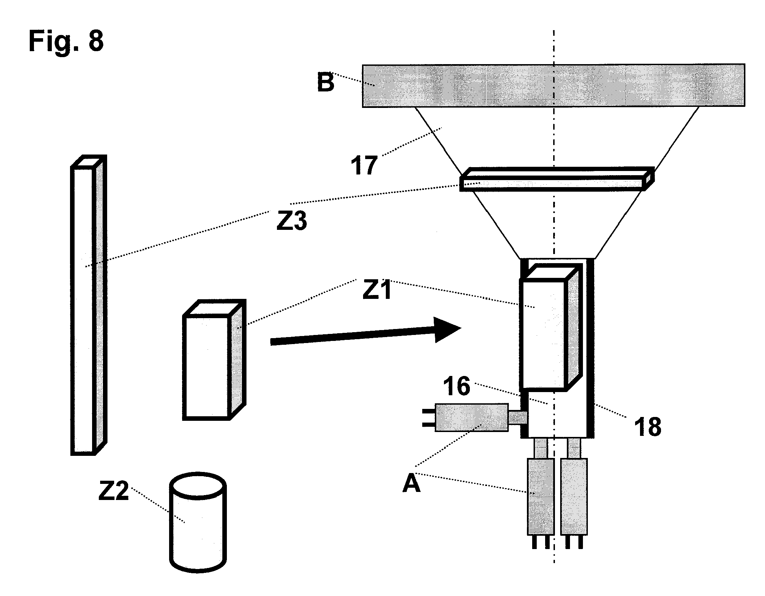

Solche Mischeinrichtungen M können auch anderweitig realisiert sein, so ist in Figur 8 eine Mischkammer 16 gezeigt, in der ein quaderförmiger statischer Mischer Z1 angeordnet ist. Alternativ kann ein quergelegter quaderförmiger Mischkörper Z3 im Angussbereich angeordnet sein. Weiterhin können auch andere statische Mischkörper wie mit der Bezugsziffer Z2 dargestellt in der Mischkammer vorgesehen werden.

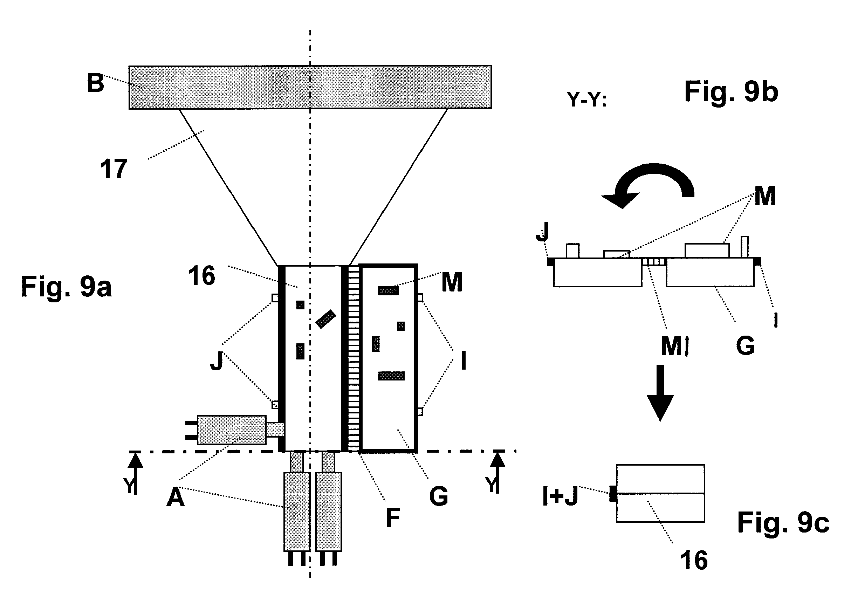

In den Figuren 9a bis 9c ist eine weitere Ausführungsform der vorliegenden erfindungsgemäßen Mischvorrichtung gezeigt.

Bei dieser Ausführungsform wird zunächst in einem ersten Taktschritt ein Kunststoffformteil spritzgegossen, welches im wesentlichen aus zwei Teilen besteht, welche über ein Filmscharnier MI verschwenkbar miteinander verbunden sind. In der Mischkammer sind die Mischelemente M bereits integriert. Beide Hälften des Kunststoffformteils weisen Eingriffselemente I und J auf. Nach dem Entformen des Kunststoffformteils G können die beiden Hälften über das Filmscharnier MI zusammengeklappt und über die Eingriffseinrichtungen I und J miteinander festgelegt bzw. verriegelt werden (Verdeckelung). Die Verdeckelung kann dabei mittels einer robotisierten Vorrichtung (z.B. einem Handlung System) oder auch einem Kernzug im Werkzeug erfolgen. Das Kunststoffformteil im zusammengeklappten Zustand ist in Figur 9c zu erkennen, in der das Kunststoffformteil in zusammengeklapptem Zustand dargestellt ist.

In Figur 9a ist das Kunststoffformteil noch nicht zusammengeklappt, wodurch man Mischelemente, die im Kunststoffformteil integral ausgebildet sind, gut erkennen kann. Diese Mischteile M sind bei zusammengeklapptem Kunststoffformteil in der Mischkammer positioniert.

Nachdem das Kunststoffformteil G entformt und zusammengeklappt ist, wird es zwischen einem Angussbereich 17 und den Dosier- und Zufuhreinrichtungen A positioniert (evtl. in einem Formwerkzeug, einer Schließeinrichtung oder einem Formträger oder aber auch ein einem vorgenannten Element), wobei eine Abdichtung zwischen den Dosier- und Zufuhreinrichtungen A und dem Kunststoffformteil hergestellt ist. Mittels der Dosiereinrichtungen werden die verschiedenen Komponenten dann in die Mischkammer 16 eingebracht, vermischen sich und strömen über den Angussbereich 17 in die Kavität B.

Die in Figur 9a bis 9c vorgestellte Mischkammer wird nach dem Beenden des Einfüllvorgangs zusammen mit dem gebildeten Formteil entformt und eventuell in einem weiteren Arbeitsschritt abgetrennt.

Alternativ kann in einem ersten Takt in einem einteiliger Kunststoffträger in Form eines nach zwei Seiten offenen Hohlraums gespritzt werden, der zylinderförmig ausgebildet sein kann. Dies kann beispielsweise mittels eines Kernzugs (Rundkern) realisiert werden. Ein solcher Kern kann bei einer Anwendung mit einem Schiebetisch in einer Schließeinrichtung auf der Düsenseite des Vorspritzlings sitzen. Nach dem ersten Takt wird der Kern aus dem Hohlraum herausgezogen und das Werkzeug geöffnet. Der Vorspritzling (Kunststoffträger) mit dem offenen Rohrbereich verbleibt dabei auf der Auswerferseite. In den offenen Rohrbereich kann nun wahlweise ein externer statischer Mischer eingebracht werden. Nach dem Verschieben der Düsenseite schließt das Werkzeug wieder. Nun werden die PUR-Injektionsmodule herangefahren und an den Hohlraum des Kunststoffträgers angedockt. Anschließend wird das Bauteil durch den eingefügten statischen Mischer mit dem reaktiven PUR-Gemisch geflutet. Dabei kann das Heranfahren der PUR-Injektionsmodule durch hydraulisch oder mechanisch betätigte Schieber im Werkzeug erfolgen.

Auf diese Weise wird für jeden Zyklus zwar ein neues Kunststoffformteil benötigt, welches jedoch extrem preiswert hergestellt werden kann. Darüber hinaus kann mit einem solchen Kunststoffformteil ein einfacher und wartungsfreundlicher Aufbau realisiert werden. Die Verfügbarkeit dieser erfindungsgemäßen Vorrichtung ist sehr hoch, da keine Reinigungsarbeiten durchzuführen sind und sich auch kein reaktives Material festsetzen kann. Die Vermischung erfolgt in einer Mischkammer, welche nach jedem Zyklus ausgewechselt oder entleert wird. Je nach Schussgewicht können auch kleine Mischkammern gewählt werden, so dass auch kleine Schussgewichte realisiert werden können. Auch sind Farbwechsel einfach und schnell realisierbar, da keinerlei Kanäle oder Bauteile gereinigt werden müssen. Die Farbeinmischung ist auch direkt am Bauteil möglich. Auch die Einbringung von verschiedenen Farben oder die Herbeiführung von Marmorierungseffekten lässt sich auf diese Weise einfach durchführen. Die jeweiligen Dosier- und Zufuhreinrichtungen lassen sich einfach aufbauen, wobei nur wenige Ventile und Hydraulikeinrichtungen notwendig sind, was sich positiv auf die Lebensdauer auswirkt. Insgesamt ist die vorliegende Mischeinrichtung universell einsetzbar und extrem flexibel auszugestalten.

### Bezugszeichenliste

- 1: Vorlaufleitung Komponente 1
- 2: Vorlaufleitung Komponente 2
- 3: Rücklaufleitung Komponente 1
- 4: Rücklaufleitung Komponente 2
- 5: Zufuhrleitung Komponente 1
- 6: Zufuhrleitung Komponente 2
- 7: Erster Verschlussschieber in Rücklaufleitung Komponente 1
- 8: Zweiter Verschlussschieber in Zufuhrleitung Komponente 1
- 9: Dritter Verschlussschieber in Zufuhrleitung Komponente 2
- 10: Vierter Verschlussschieber in Rücklaufleitung Komponente 2
- 11: Mischkammer-Zufuhrdüse Komponente 1
- 12: Mischkammer-Zufuhrdüse Komponente 2
- 13: Zufuhrdüsen-Aufnahmeeinrichtung
- 14: Adapterzwischenstück
- 15: Zufuhreinrichtung-Hauptblock
- 16: Mischkammer
- 17: Nachvermischungsbereich - PUR Anguss
- 18: Mischkammerbegrenzungswand
- 19: Werkzeug
- 20: PUR-Reaktionsgemisch
- 21: Montageblock für Komponente 3
- 22: Vorlaufleitung Komponente 3
- 23: Rücklaufleitung Komponente 3
- 24: Fünfter Verschlussschieber für Zufuhrleitung Komponente 3
- 25: Sechster Verschlussschieber für Zufuhrleitung Komponente 3
- 26: Montageblock für Komponente 4
- 27: Vorlauf- und Zufuhrleitung Komponente 4
- 28: Siebter Verschlussschieber für Zufuhrleitung Komponente 4
- A: Injektionsvorrichtung für PUR-Komponente
- B: Kavität - Kunststoff-PUR-Verbundbauteil
- C: Montagewinkel
- D: Dichtfläche
- F: Filmscharnier
- G: Zweite Hälfte einer spritzgegossenen Mischkammer
- H: Verfahr- und Anpressvorrichtung
- I: Haken
- J: Eingriffselement
- L: Öffnung in der Mischkammerwand
- M: Mischelemente
- P: Anpressdruck
- S: Verfahrweg
- V: Verfahrgeschwindigkeit
- Z1, Z2, Z3: Einlege-Mischelemente

- N1: Vorlaufleitung für Komponente
- N2: Zufuhrleitung zur Mischkammer
- N3: Zufuhrdüse
- N4: Rücklaufleitung
- N5: Verschluss- und Steuernadel
- N6: Ansteuermodul
- N7: Injektionsmodul

## Patentansprüche

1. Mischvorrichtung für reaktive Kunststoffkomponenten umfassend
- zumindest eine Dosier- und Zufuhreinrichtung (15, A) zur Zufuhr von reaktiven Kunststoffausgangskomponenten sowie
- eine Mischkammer (16), welche
-- mit der Dosier- und Zufuhreinrichtung (15, A) verbunden oder verbindbar ist,
-- in der die zumindest zwei reaktiven Ausgangskomponenten miteinander zu einem reaktiven Gemisch vermischbar sind,
-- die zur Einbringung des reaktiven Gemisches in eine Kavität (B) ausgebildet ist und
-- die Mischkammer (16) im Formwerkzeug (19) vorgesehen ist,
**dadurch gekennzeichnet,**
**dass** für die Komponenten zumindest eine Dosier- und Zufuhrvorrichtung (A) vorgesehen ist, in der ein Vorlauf- und Rücklaufkanal (1, 2, 3, 4, 5, 6) angeordnet sind.

2. Mischvorrichtung nach Anspruch 1,
**dadurch gekennzeichnet,**
**dass** für zumindest zwei Komponenten eine kombinierte Dosier- und Zufuhrvorrichtung (A) vorgesehen ist.

3. Mischvorrichtung nach Anspruch 1,
**dadurch gekennzeichnet,**
**dass** für jede Komponente eine eigene Dosier- und Zufuhrvorrichtung (A) vorgesehen ist.

4. Mischvorrichtung nach einem der Ansprüche 1 bis 3,
**dadurch gekennzeichnet,**
**dass** die Mischkammer (16) im Formwerkzeug (19) mit einem Kunststoffformteil (18) zumindest teilweise ausgekleidet ist.

5. Mischvorrichtung nach Anspruch 4,
**dadurch gekennzeichnet, dass**
die Mischkammer (16) in einem in einem vorhergehenden Produktionsschritt hergestellten Kunststoffformteil (G) ausgebildet ist, welches während des Einfüllbetriebs zwischen der Dosier- und Zufuhreinrichtung (15, A) und einer Kavität (B) durch einen Angussbereich (17) getrennt zwischengeschaltet ist, wobei das Kunststoffformteil zusammen mit dem fertigen Produkt aus dem Werkzeug entformbar ist.

6. Mischvorrichtung nach Anspruch 5,
**dadurch gekennzeichnet,**
**dass** das Kunststoffformteil (G) im wesentlichen zwei Hälften aufweist, die miteinander unter Ausbildung einer Mischkammer (16) verbunden oder verbindbar sind.

7. Mischvorrichtung nach Anspruch 6,
**dadurch gekennzeichnet,**
**dass** die beiden Hälften einerseits über ein Filmscharnier (M) verschwenkbar miteinander verbunden sind und andererseits über Eingriffselemente (I, J) in einer geschlossenen Position haltbar sind.

8. Mischvorrichtung nach einem der vorhergehenden Ansprüche,
**dadurch gekennzeichnet,**
**dass** zwischen einer Dosier- und Zufuhreinrichtung (15) und der Mischkammer (16) eine Düseneinrichtung (13) angeordnet ist, die eine der Anzahl der Zufuhrkanäle (5, 6) entsprechende Anzahl von Düsenöffnungen (11, 12) aufweist, wobei jede Düsenöffnung (11, 12) mit einem Zufuhrkanal 5, 6) verbunden oder verbindbar ist.

9. Mischvorrichtung nach einem der vorhergehenden Ansprüche,
**dadurch gekennzeichnet,**
**dass** zwischen der Dosier- und Zufuhreinrichtung (15) und der Düseneinrichtung (13) eine austauschbare Zwischenvorrichtung (14, 21, 27) angeordnet ist, die zumindest eine der Anzahl der Komponenten in der Dosier- und Zufuhreinrichtung (15) entsprechende Zahl von Verbindungskanälen (5, 6) aufweist.

10. Mischvorrichtung nach Anspruch 9,
**dadurch gekennzeichnet,**
**dass** die Zwischenvorrichtung (14, 21, 27) zumindest eine weitere Zufuhreinrichtung (21, 26) aufweist, mit welcher der Mischkammer (16) weitere Komponenten zuführbar sind.

11. Mischvorrichtung nach Anspruch 9 oder 10,
**dadurch gekennzeichnet,**
**dass** in der Zwischenvorrichtung (21, 26) zumindest ein weiterer Vorlauf- und/oder Zufuhrkanal (22, 27) für eine weitere Komponente vorgesehen ist.

12. Mischvorrichtung nach einem der vorhergehenden Ansprüche,
**dadurch gekennzeichnet,**
**dass** die Mischkammer (16) für jede Dosier- und Zufuhreinrichtung (15, A) eine eigene Öffnung (L) besitzt, an der eine zugeordnete Dosier- und Zufuhreinrichtung (15, A) ankoppelbar ist.

13. Mischvorrichtung nach Anspruch 12,
**dadurch gekennzeichnet,**
**dass** die Öffnung (L) einer Mischkammer (16) eine komplementär zu einer zugeordneten Dosier- und Zufuhreinrichtung (15, A) ausgebildete Form besitzt.

14. Mischvorrichtung nach einem der vorhergehenden Ansprüche,
**dadurch gekennzeichnet,**
**dass** die Dosier- und Zufuhreinrichtung (15, A) mittels einer Betätigungseinrichtung (H) zur Mischkammer (16) hin- und von der Mischkammer (16) weg verfahrbar sowie an die Mischkammer (16) ankoppelbar ist.

15. Mischvorrichtung nach einem der vorhergehenden Ansprüche,
**dadurch gekennzeichnet,**
**dass** nachfolgend der Mischkammer (16) ein Angussbereich (17) vorgesehen ist.

16. Mischvorrichtung nach einem der vorhergehenden Ansprüche,
**dadurch gekennzeichnet,**
**dass** in der Mischkammer (16) oder im Angussbereich (17) Mischelemente (M) vorgesehen sind.

17. Verfahren zur Herstellung eines Kunststoffverbundbauteils mit den Schritten
- Herstellen eines Mischkammerelements in Form eines Kunststoffträgerbauteils mit einem Angussbereich in einem ersten Arbeitsschritt,
- Zuführen von zumindest zwei reaktiven Komponenten zum Mischkammerelement, wobei zum Zuführen einer Komponente zu der Mischkammer in einer Dosier- und Zufuhrvorrichtung von einer Rezirkulations- in eine Zufuhrstellung umgeschaltet wird und am Ende des Zuführens der Komponenten wieder von der Zufuhrstellung in eine Rezirkulationsstellung zurückgeschaltet wird,
- Vermischen der separat zugeführten Komponenten in der Mischkammer,
- Überführen der vermischten Komponenten über den Angussbereich in eine Kavität eines Werkzeugs und
- Entformen des Mischkammerelements

18. Verfahren nach Anspruch 17,
**dadurch gekennzeichnet,**
**dass** zusätzlich zu den zwei reaktiven Komponenten zumindest eine weitere Komponente in die Mischkammer zugeführt wird.

19. Verfahren nach einem der vorhergehenden Ansprüche 17 oder 18,
**dadurch gekennzeichnet,**
**dass** das Gemisch aus den Reaktionskomponenten weiter im Angussbereich miteinander vermischt wird.

20. Verfahren nach einem der vorhergehenden Ansprüche 17 bis 19,
**dadurch gekennzeichnet,**
**dass** Vorlauf-, Rücklauf- und /oder Zulaufleitungen oder -kanäle temperiert werden.

21. Verfahren nach einem der vorhergehenden Ansprüche 17 bis 20,
**dadurch gekennzeichnet,**
**dass** eine Verfahrgeschwindigkeit oder ein Anpressdruck für eine Dosier- und Zufuhrvorrichtung geregelt oder gesteuert wird.

22. Verfahren nach Anspruch 21,
**dadurch gekennzeichnet,**
**dass** der Anpressdruck in Abhängigkeit vom Einspritzdruck geregelt wird.

23. Verfahren nach einem der vorhergehenden Ansprüche 17 bis 22,
**dadurch gekennzeichnet,**
**dass** die Position jeder Dosier- und Zufuhrvorrichtung überwacht wird.

24. Verfahren nach einem der vorhergehenden Ansprüche 17 bis 23,
**dadurch gekennzeichnet,**
**dass** Mischelemente zum Mischen der Komponenten verwendet werden.
